# EUROPEAN PATENT SPECIFICATION

(11) **EP 1 969 270 B1**
(45) Date of publication and mention of the grant of the patent: **19.04.2017**
(21) Application number: 05850117.2
(22) Date of filing: 21.10.2005
(51) Int. Cl.: F16K 31/06, F16K 27/02, F16K 31/40

(54) **IN-TUBE SOLENOID GAS VALVE**
MAGNETGASVENTIL IN EINEM ROHR
ELECTROVANNE A GAZ POSITIONNEE A L INTERIEUR D UN TUBE

(43) Date of publication of application: 17.09.2008
(73) Proprietor: Wang, Chia-Ping, Mississauga, Ontario L4W 2E5 (CA); Wang, Yu-Ching, Mississauga, Ontario L4W 2E5 (CA); Wang, Wei-Ching, Missisauga, Ontario L4W 2E5 (CA)
(72) Inventor: WANG, Chia-Ping, Mississauga, Ontario L4W 2E5 (CA)
(74) Representative: Aslund, G Roland
(86) International application number: PCT/CA2005/001618
(87) International publication number: WO 2007/045067

(56) References cited:
- EP-A1- 0 192 607
- CA-A1- 2 414 220
- GB-A- 864 659
- GB-A- 1 287 206
- US-A- 5 529 387

## Description

### BACKGROUND OF THE INVENTION

The configuration of piping systems is complex in alternative fuel vehicles. The fuel, either natural gas or hydrogen, is normally stored in a high pressure tank, controlled by solenoid gas valves when it is in operation. Generally, the space in a vehicle is limited; hence a small size of valves and piping systems is desired. In addition, having an in-line inlet and outlet ports would simplify the arrangement of piping systems.

Valves are used to control the flow rate of the fuel under a specified inlet pressure. Because of the inlet pressure restrictions and temperature variations, it is difficult to design an appropriate valve that meets all the requirements for the piping systems. Solenoids of a reasonable size can typically produce a pulling force that is approximately only 1/100 of the force necessary to unseat a valve that is being forced shut by the high-pressure gases. To overcome this, most of the gas valves adopt a two-stage process in which a small "bleed" orifice is first opened, allowing the high-pressure gas from the storage tank to flow into a downstream outlet passage way through the "bleed" orifice that leads to the engine. As the downstream outlet passage way filled with gas, the pressure will increase, subsequently reducing the force necessary gradually to unseat the closed valve. Eventually, the differential pressure between the upstream and downstream passage ways becomes infinite small to allow the valve to be opened by a relatively weak pull of the solenoid valve, thus resulting in the flow of high-pressure gas from the storage tank to the vehicle engine. Examples of such valves are known from documents GB864659, EP 0192 607, US5,529,387, GB 1 287 206 and CA 2 414 220. In a typical two-stage valve assembly, two pistons were required in the operation solenoid assembly, namely primary piston and main piston. The primary piston is located on top of the main piston. When in operation, the primary piston is first opened to allow gas flow through a small bleed orifice located on the main piston to create a pressure difference between the front and back sides of the main piston. This difference in pressure causes the valve to open to gain full gas flow. Since the movement of both pistons affects one another, the opening stroke (distance) of the primary piston must be equal to or larger than that of the main piston to give required operations. Since an electrical coil is utilized to generate magnetic field to cause the primary piston to open, the longer the primary piston has to travel, the less magnetic force the piston experiences. This becomes problematic if the pressure of the inlet is increased. Hence, to increase the magnetic attraction force that the primary piston experiences, the magnetic field strength has to be increased. To increase the magnetic strength, the number of turns of the electrical coil has to be increased if the input current stays the same. An increase in number of turns in a coil also increases the size of the solenoid assembly, which is undesirable.

In the current design, described hereafter, the equivalent main piston will move with a solenoid assembly while the movement of equivalent small piston does not affect the movement of the main piston. It can reasonably reduce the size of valve and/or increase the gas flow rate.

### SUMMARY OF THE INVENTION

The newly designed solenoid valve can be used in a high gas flow and high pressure application. It is most applicable where a small-sized solenoid gas valve with the ability to control high gas flow rate.

It is the object of the present invention to provide an in-tube solenoid gas valve of the above mentioned general types which avoid the disadvantages of and improve the performance of the prior art.

It is also the object of the present invention to provide a solenoid gas valve which has intrinsic ability to reduce the opening stroke (distance) of a magnetic rod to either alleviate the electrical power required or to reduce the size of the valve. The movement of solenoid assembly is caused by the spring force and gas pressure; therefore, the opening distance of said solenoid assembly is not limited by magnitude of magnetic force generated by electrical power via electrical coil. So that, the present invention can reasonably increase gas flow rate.

In keeping with these objects and with others which will became apparent hereinafter, features of present invention reside, briefly stated in a solenoid gas valve which has a valve tube defining a gas inlet passage with an inlet fitting, a gas outlet passage with a outlet fitting, and a cavity; a support cylindrical body, inserting onto outlet fitting, held by a compression spring against to inlet fitting. A solenoid assembly comprising with flange, electrical coil, stop, and sleeve, movable axially in the chamber of said support cylindrical body, pushed by a compression spring against on the seat of said outlet fitting to close gas flow. An o-ring on said flange of said solenoid assembly segregates the chamber of said support cylindrical body into front side chamber and back side chamber.

There are two gas conduits to the outlet passage. The main gas flows through holes on said support cylindrical body peripherally, locating at the side of attaching to outlet fitting, into the back side chamber in support cylindrical body. Another gas conduit, the gas flow goes through the minuscule hole in said support cylindrical body, then, via the eccentric axial small hole in the said stop to the hollow space of said solenoid assembly.

A magnetic rod, able to slide in said hollow space of said solenoid assembly, is pushed by a compression spring against on the bleed orifice of said flange of said solenoid assembly to close gas flow. A said electrical coil means associated with said stop, said sleeve, said flange, and said support cylindrical body to provide a magnetic field for movements of said magnetic rod, so that when said electrical coil is de-energized, said magnetic cylindrical rod closes said bleed orifice to seal gas flow and causes a pressure equalization, allowing said compression spring to push said solenoid assembly to close the valve. When said electrical coil is energized said magnetic rod opens said bleed orifice to let gas flow to said outlet passage and lowers a pressure which causes a pressure difference between front and back side of said solenoid assembly, pushing of said main piston to open the valve.

The lead wires of said electrical coil extend to the external pass-through connector for powering via the internal chamber in said support cylindrical body, internal pass-through plug, inside said cavity of said valve tube.

Hence, in the current design, described hereafter, the stroke of the movement of magnetic rod is not affected by the required stroke of that of the solenoid assembly. The stroke of the magnetic rod is minimized and the stroke of the solenoid assembly is maximized to result in a reduction of the electrical coil size and an increase in maximum flow rate under the same conditions of the same inlet pressure and the same power supply.

When the solenoid gas valve is designed in accordance with the present invention, it avoids the disadvantages of the prior art and provide for the above-specified advantages.

The novel features which are considered as characteristic for the present invention are set forth in particular in the appended claims. The invention itself, however, both as to its construction and its method of operation, together with additional objects and advantages thereof, will be best understood from the following description of specific embodiments when read in connection with the accompanying drawings.

### BRIEF DESCRIPTION OF THE DRAWINGS

One embodiment of this invention is illustrated in the accompanying drawings, in which like numerals denote like parts throughout the several views, and in which:
Figure 1 is an axial sectional view through a valve constructed in accordance with this invention, showing the valve in a "closed" state;
Figure 2 is a detailed view of Figure 1 through a valve constructed in accordance with this invention, showing the valve in a "closed" state;
Figure 3 is a detailed view, similar to that of Figure 2, showing the small piston opens the bleed orifice with an active magnetic field;
Figure 4 is a detailed view, similar to that of Figure 2, showing the main piston opens the outlet passage with an active magnetic field. The valve is in a "fully open" state;
Figure 5 is a detailed view, similar to that of Figure 2, showing the small piston closes the bleed orifice after the magnetic field diminishes.

### DESCRIPTION OF PREFERRED EMBODIMENTS

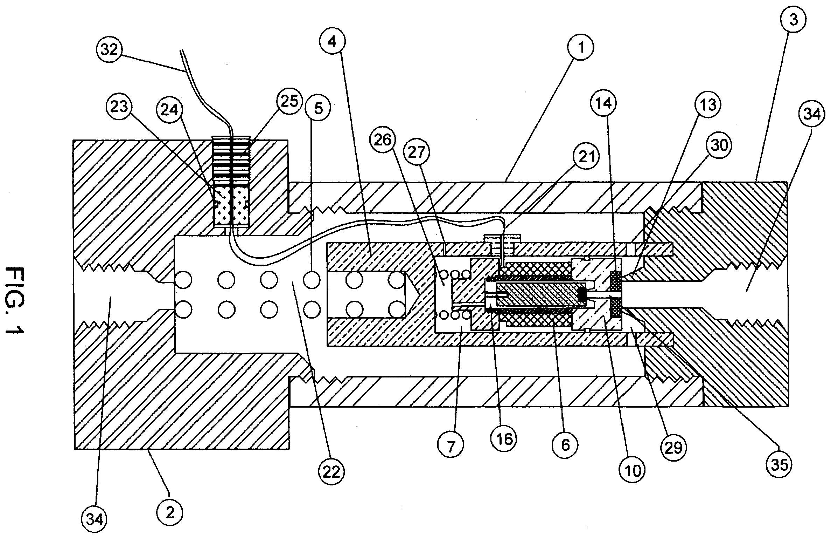

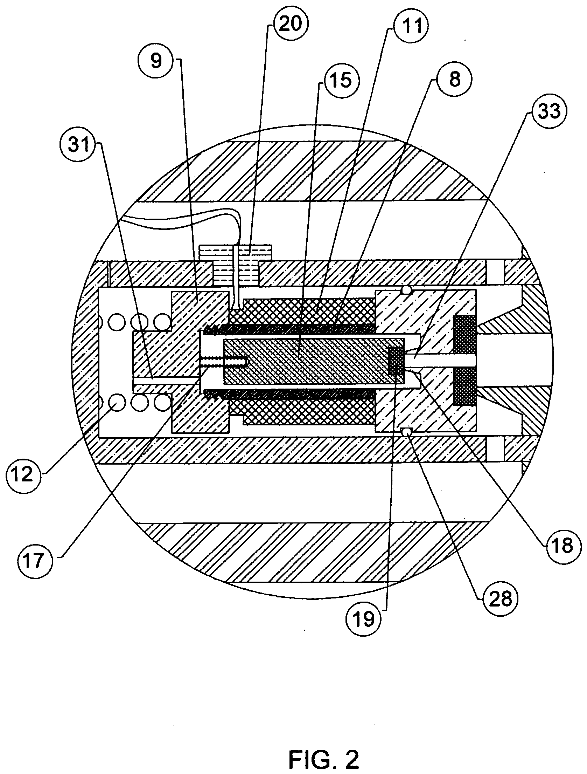

Attention is first directed to Figure 1 and Figure 2, which shows an in-tube solenoid gas valve in section view. The valve tube 1 has a hollow hole with internal threads at both ends, to accept both inlet fitting 2 and outlet fitting 3. Both fittings have an axial hole 34 with internal threads for connecting adaptive fittings of piping system. A support cylindrical body 4, pushed by a compression spring 5 against said outlet fitting 3, having a chamber 7, provides the space for movements of the solenoid assembly 6 which comprises of a hollow sleeve 8, a stop 9, a flange 10 and an electrical coil 11.

A compression spring 12 pushes said solenoid assembly 6 to the seal seat 13 of said outlet fitting 3 at "closed" state. A plastic insert 14 is molded onto said flange 10 to provide seal. A magnetic rod 15 moveable axially in the hollow space 16 of said solenoid assembly 6, while a compression spring 17 pushes said magnetic rod 15 against the small seal seat 18 of said flange 10 at "closed" state. A rubber insert 19 is molded onto said magnetic rod 15 to provide seal.

An internal pass-through plug 20, inserting into the support cylindrical body 4, provides the strain relief of lead wires of coil 21 which extends from said electrical coil 11, through said support cylindrical body 4, to the cavity 22 of said valve tube 1. Said lead wires of coil 21 are soldered onto the terminals of an external pass-through connector 23 at the bottom of the said connector 23 as shown in the drawing. The said external pass-through connector 23 is placed in said inlet fitting 2 with an o-ring 24 that seals high pressure gas. Because of the high pressure in said valve tube 1, a metal plug 25 with a center hole is threaded into said inlet fitting 2 to hold said external pass-through connector 23.

The high pressure gas passes through said inlet fitting 2 from upstream piping system to said cavity 22 of said valve tube 1. Gas penetrates into the front inside chamber 26 of said support cylindrical body 4 through a miniscule hole 27 and an o-ring 28 divides said chamber 7 of said support cylindrical body 4 into two chambers, said front inside chamber 26 and said back inside chamber 29. Gas from said valve tube 1 flows through holes 30 locating peripherally into said back inside chamber 29 of said support cylindrical body 4. The gas in said front inside chamber 26 fills said hollow space16 of said solenoid assembly 6 through the eccentric axial small hole 31.

At "closed" state, as shown in Figure 2, both said magnetic rod 15 and said solenoid assembly 6 are pushed by said compression spring 17 and said compression spring 12 respectively. Since the seal material is molded onto both said magnetic rod 15 and said flange 10, both the spring force and the high pressure gas push the seal against to said small seal seat 18 and seal seat 13, therefore blocks the gas to flow to the outlet passage.

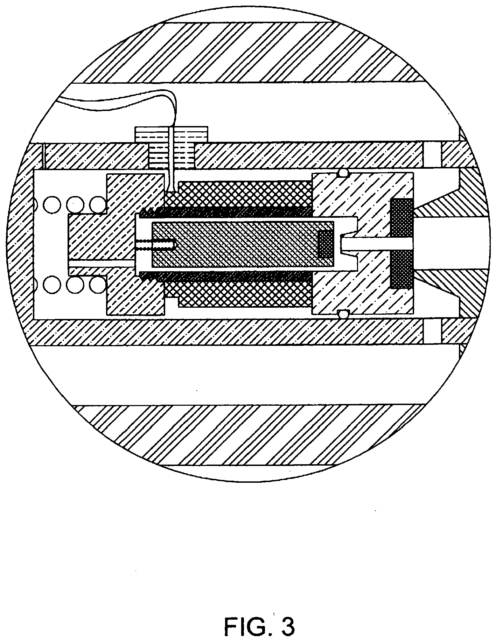

Wires from power supply 32, through said thread metal plug 25, are soldered onto the terminals of said external pass-through connector 23 at the outer of said valve tube 1, providing the channel for input electrical current to said electrical coil 11 which is incorporated with said solenoid assembly 6 to provide a magnetic field for movements of said magnetic rod 15 and said solenoid assembly 6 of the valve. The appropriate materials should be selected for stop 9, sleeve 8, support cylindrical body 4, and flange 10 so that these components form a magnetic loop. At the first stage of opening, the solenoid is energized, as shown in Figure 3, said magnetic rod 15 is pulled up by the magnetic force to allow the gas flow in said hollow space 16 flow through bleed orifice 33 and axial hole 35 in said flange 10. Because the diameter of said minuscule hole 27 is smaller than that of said bleed orifice 33, so that, the amount of gas supply into said hollow space 16 is less than that of gas released; the pressure difference between the front and back side of magnetic rod 15 is equal. The magnetic force created by said electrical coil 11 causes said magnetic rod 15 to slide and remains in "open state".

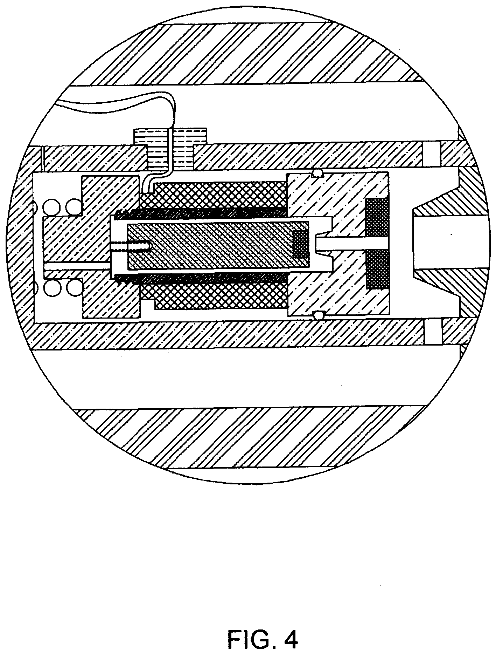

Since the diameter of said miniscule hole 27 is much smaller than that of said through hole 30 and said o-ring 28 segregates said chamber 7 into said front inside chamber 26 and said back inside chamber 29, the gas pressure in said front chamber 26 is less than that of said back inside chamber 29, causes a pressure difference between front and back sides of said solenoid assembly 6. Said solenoid assembly 6 moves, as shown in Figure 4, allowing flow through said outlet fitting 3.

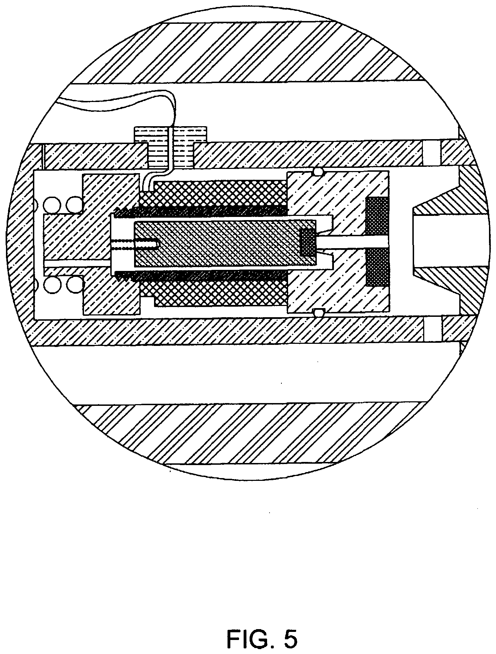

When said electrical coil 11 is de-energized, as shown in Figure 5, said magnetic rod 15 moves against the small seal seat 18 pushed by the compression spring 17. While high pressure gas enters the hollow space 16 through a minuscule hole 27 and a eccentric axial small hole 31, builds up the gas pressure in said hollow space 16 of said solenoid assembly 6. The pressure in said hollow space 16 compresses the rubber insert 19 onto the magnetic rod 15 to close the bleed orifice 33.

The increasing gas pressure in said front inside chamber 26 causes pressure equalization, results in said compression spring 12 pushes said solenoid assembly 6 against the seal seat 13. This causes the amount of gas leak to the outlet passage to be less than that of flows into the chamber 7 of the support cylindrical body 4. Because of the difference in projected surface area between front and back side of said solenoid assembly 6, the force of the front side chamber 26 is larger than that of the back side chamber 29. Hence, the plastic insert 14 of said flange 10 is compressed onto the seal seat 13 to cease the gas flow. This is the "closed" state, as shown in Figure 1.

## Claims

1. An in-tube solenoid gas valve, comprising:
a valve tube (1), a support cylindrical body (4), and an axially moveable solenoid assembly said valve tube defining a gas inlet passage, a gas outlet passage and a cavity (22); an inlet fitting (2) with an axial hole threaded into said inlet passage for communication with the gas source; an outlet fitting (3) provides a seal seat (13) and an axial hole (34) threading into said outlet passage for communication with the outlet; said support cylindrical body being a cylindrical body defining a chamber (7), with a closed end and an open end, fixed within said valve tube; the axis of said chamber of said support cylindrical body is parallel to the axis of said axial hole of said outlet fitting;
said axially moveable solenoid assembly comprising a flange (10), an electrical coil (11), a stop (9), a sleeve 8) and a magnetic rod (15); said sleeve having a hollow space and being connected between said stop and said flange; said flange being a cylindrical disk, providing a small seal seat, a bleed orifice (33) at one end proximate to said sleeve; an annular plastic insert (14) is molded onto said flange at the side that is close to the outlet, to provide seal; an axial hole (35) connecting said bleed orifice providing as a vent passage to said outlet from said hollow space; said magnetic rod (15), able to slide within said hollow space of said sleeve, to open and close said bleed orifice; said electrical coil (11) being wound around said sleeve (8) for producing a magnetic field;
said axially moveable solenoid assembly being able to slide in said chamber of said support cylindrical body (4) between an open and a closed position; such that, said support cylindrical body and said moveable solenoid assembly forming a magnetic loop when said electrical coil is energized; said axially moveable solenoid assembly further comprising an o-ring (28) located in said flange (10) circumferentially for segregating said chamber of said support cylindrical body to a front inside chamber (26) and a back inside chamber(29); said front inside chamber proximate to said closed end of said support cylindrical body and said back inside chamber proximate to said open end of said support cylindrical body; said o-ring (24) blocking the gas communication between said front inside chamber and said back inside chamber;
a gas conduit, via a minuscule hole (27) of said support cylindrical body, for passing the high pressure gas from said cavity of said valve tube to said front inside chamber of said support cylindrical body; a second gas conduit, via an eccentric axial small hole of said stop, for passing gas from said front inside chamber of said support cylindrical body to said hollow space of said sleeve; a third gas conduit via said bleed orifice (33) and said axial hole of said flange, for passing gas from said hollow space of sleeve to the outlet of said axially moveable solenoid assembly; said minuscule hole having a diameter smaller than that of both said eccentric axial small hole (31) and said bleed orifice (33) of said flange of said solenoid assembly;
a set of peripheral holes on said support cylindrical body, proximate said open end of said support cylindrical body, commuting the high pressure gas in said cavity of said valve tube and said back inside chamber;
when said electrical coil (11) is de-energized, said magnetic rod closes said bleed orifice of said flange and said axially moveable solenoid assembly moves to said closed position, said annular plastic insert (14) of said flange pressed on said seal seat of said outlet fitting, stopping the high pressure gas flow in said cavity through said axial hole of said outlet fitting.

2. The in-tube solenoid gas valve as defined in claim 1 comprising; a main compression spring (12) for pushing said axially moveable solenoid assembly towards said seal seat of said outlet fitting to close said outlet.

3. The in-tube solenoid gas valve as defined in claim 1 further comprising a compression spring (17) for pushing said magnetic rod towards said seal seat of said flange to close said bleed orifice.

4. The in-tube solenoid gas valve as defined in claim 1, said valve tube is a cylindrical tube, so that said support cylindrical body is pushed by a compression spring (12), against said inlet fitting, inserting into said outlet fitting at said open end; said compression spring is compressed between said inlet fitting and said closed end of said support cylindrical body.

5. The in-tube solenoid gas valve as defined in claim 3, said magnetic rod, able to slide within said hollow space of said sleeve, and pushed by said compression spring (17) at one end, onto said small seal seat of said flange to a closed position; a rubber insert (19) is molded onto said magnetic rod on other end, to provide seal.

6. The in-tube solenoid gas valve as defined in claim 12, wherein extend lead wires (32) of said electrical coil pass through the hole of an internal pass-through plug which is inserted into said support cylindrical body, to said cavity of said valve tube.

7. The in-tube solenoid gas valve as defined in claim 6 wherein the extend lead wires of said electrical coil, are soldered on terminals of an external pass-through connector (23) at one end; external wires which are from a power supply, through a threaded metal plug with a center hole, are soldered on terminals of said external pass-through connector at the other end; electrical current pass through said external wires from said power supply, said external pass- through connector, to said lead wires of said electrical coil, to create magnetic field for axial movements of said magnetic rod.

8. The in-tube solenoid gas valve, defined in claim 1, said external pass-through connector comprising an o-ring for sealing internal pressure gas in said cavity of said valve tube; said thread metal plug (25) thread into said inlet fitting, to hold said external pass-through connector in said inlet fitting.

## Patentansprüche

1. In-Rohr-Magnetgasventil, umfassend:
ein Ventilrohr (1), einen zylindrischen Stützkörper (4) und eine axial bewegbare Solenoidanordnung, wobei das Ventilrohr einen Gaseinlassdurchgang, einen Gasauslassdurchgang und eine Kavität (22) definiert;
ein Einlassfitting (2) mit einem axialen Loch, das in den Einlassdurchgang zur Verbindung mit der Gasquelle eingezogen ist; wobei ein Auslassfitting (3) einen Dichtungssitz (13) und ein axiales Loch (34) bereitstellt, das in den Auslassdurchgang eingezogen ist zur Verbindung mit dem Auslass;
wobei der zylindrische Stützkörper ein zylindrischer Körper ist, der eine Kammer (7) mit einem geschlossenen Ende und einem offenen Ende definiert, das in dem Ventilrohr befestigt ist;
wobei die Achse der Kammer des zylindrischen Stützkörpers parallel zur Achse des axialen Lochs des Auslassfittings ist;
wobei die axial bewegbare Solenoidanordnung einen Flansch (10), eine elektrische Spule (11), einen Anschlag (9), eine Hülse 8) und einen Magnetstab (15) umfasst;
wobei die Hülse einen Hohlraum aufweist und zwischen dem Anschlag und dem Flansch verbunden ist;
wobei der Flansch eine zylindrische Scheibe ist, die einen kleinen Dichtungssitz, eine Entlüftungsöffnung (33) an einem Ende nahe zu der Hülse bereitstellt;
wobei ein ringförmiger Kunststoffeinsatz (14) an der Seite des Flanschs angeformt ist, die nahe dem Auslass ist, um eine Abdichtung bereitzustellen;
wobei ein axiales Loch (35) die Entlüftungsöffnung verbindet, so dass es als Entlüftungsdurchgang aus dem Hohlraum zu dem Auslass bereitgestellt ist;
wobei der Magnetstab (15) in der Lage ist, innerhalb des Hohlraums der Hülse zu gleiten, um die Entlüftungsöffnung zu öffnen und zu schließen;
wobei die elektrische Spule (11) um die Hülse (8) gewickelt ist, um ein Magnetfeld zu erzeugen;
wobei die axial bewegbare Solenoidanordnung in der Lage ist, in der Kammer des zylindrischen Stützkörpers (4) zwischen einer offenen und einer geschlossenen Position zu gleiten;
so dass der zylindrische Stützkörper und die Solenoidanordnung eine magentische Schleife bilden, wenn die elektrische Spule mit Energie versorgt ist;
wobei die axial bewegbare Solenoidanordnung ferner einen O-Ring (28) aufweist, der in dem Flansch (10) in Umfangsrichtung angeordnet ist, um die Kammer des zylindrischen Stützkörpers in eine vordere Innenkammer (26) und eine hintere Innenkammer (29) zu trennen;
wobei die vordere Innenkammer in der Nähe des geschlossenen Endes des zylindrischen Stützkörpers und die hinteren Innenkammer nahe dem offenen Ende des zylindrischen Stützkörpers liegt;
wobei der O-Ring (24) die Gasverbindung zwischen der vorderen Innenkammer und der hinteren Innenkammer blockiert;
wobei eine Gasleitung durch ein winziges Loch (27) des zylindrischen Stützkörpers bereitgestellt ist, zum Durchleiten des Hochdruckgases aus der Kavität des Ventilrohrs zu der vorderen Innenkammer des zylindrischen Stützkörpers;
wobei eine zweite Gasleitung durch ein exzentrisches axiales kleines Loch des Anschlags bereitgestellt ist, zum Durchleiten von Gas von der vorderen Innenkammer des zylindrischen Stützkörpers zu dem Hohlraum der Hülse;
wobei eine dritte Gasleitung durch die Entlüftungseinrichtung (33) und die axiale Bohrung des Flansches bereitgestellt ist, zum Durchleiten von Gas aus dem Hohlraum der Hülse zu dem Auslass der axial beweglichen Solenoidanordnung; wobei das winzige Loch einen kleineren Durchmesser als der sowohl des exzentrischen axiale kleine Lochs (31) als auch der Entlüftungsöffnung (33) des Flansches der Solenoidanordnung;
wobei ein Satz von peripheren Löchern auf dem zylindrischen Stützkörper nahe dem offenen Ende des zylindrischen Stützkörpers das Hochdruckgas zwischen der Kavität des Ventilrohrs und der hinteren Innenkammer kommutieren;
wenn die Energie der elektrische Spule (11) entladen ist, schließt der Magnetstab die Entlüftungsöffnung des Flansches und die axial bewegbare Solenoidanordnung bewegt sich in die geschlossene Position, wobei der ringförmige Kunststoffeinsatz (14) des Flansches auf den Dichtungssitz des Auslassfittings gepresst ist, so dass der Hochdruckgasfluss in der Kavität durch das axiale Loch des Auslassfitting stoppt.

2. In-Rohr-Magnetgasventil nach Anspruch 1, umfassend; eine Hauptdruckfeder (12) zum Drücken der axial beweglichen Solenoidanordnung in Richtung des Dichtungssitzes des Auslassfittings, um den Auslass zu schließen.

3. In-Rohr-Magnetgasventil nach Anspruch 1, ferner umfassend eine Druckfeder (17) zum Drücken des Magnetstabes auf den Dichtungssitz des Flansches, um die Entlüftungsöffnung zu schließen.

4. In-Rohr-Magnetgasventil nach Anspruch 1, wobei das Ventilrohr ein zylindrisches Rohr ist, so dass der zylindrische Stützkörper durch eine Druckfeder (12) gegen das Einlassfitting gedrückt ist, die in das Auslassfitting am offenen Ende eingesetzt ist; wobei die Druckfeder zwischen dem Einlassfitting und dem geschlossenen Ende des zylindrischen Stützkörpers zusammengedrückt ist.

5. In-Rohr-Magnetgasventil nach Anspruch 3, wobei der Magnetstab in der Lage ist, innerhalb des Hohlraums der Hülse zu gleiten, und durch die Druckfeder (17) an einem Ende auf den kleinen Dichtungssitz des Flansches in eine geschlossene Position gedrückt ist; wobei ein Gummieinsatz (19) auf dem Magnetstab an einem anderen Ende angeformt ist, um eine Dichtung bereitzustellen.

6. In-Rohr-Magnetgasventil nach Anspruch 12, wobei verlängerte Anschlussdrähte (32) der elektrischen Spule durch das Loch eines internen Durchgangsstopfens hindurchgehen, der in den zylindrischen Stützkörper in die Kavität des Ventilrohrs eingeführt ist.

7. In-Rohr- Magnetgasventil nach Anspruch 6, wobei die verlängerten Anschlussdrähte der elektrischen Spule an Anschlüssen eines externen Durchgangsverbinders (23) an einem Ende angelötet sind; externe Drähte, die von einer Stromversorgung sind, sind durch einen mit einem Gewinde versehenen Metallstopfen mit einem Mittelloch geführt, sind an den Anschlüssen des externen Durchgangsverbinders am anderen Ende angelötet; elektrischer Strom fließt durch die externen Drähte von der Stromversorgung, den externen Durchgangsverbinder zu den Anschlussdrähten der elektrischen Spule, um ein Magnetfeld für axiale Bewegungen des Magnetstabes zu erzeugen.

8. In-Rohr- Magnetgasventil nach Anspruch 1, wobei der externe Durchgangsverbinder einen O-Ring zum Abdichten von Innendruckgas in der Kavität des Ventilrohrs umfasst; wobei der mit einem Gewinde versehenen Metallstopfen (25) in das Einlassfitting eingeschraubt ist, um den externen Durchgangsverbinder in dem Einlassfitting zu halten.

## Revendications

1. Électrovanne à gaz à l'intérieur d'un tube, comprenant :
un tube de vanne (1), un corps cylindrique de support (4), et un ensemble solénoïde axialement mobile
ledit tube de vanne définissant un passage d'entrée de gaz, un passage de sortie de gaz et une cavité (22) ; un raccord d'entrée (2) avec un trou axial fileté dans ledit passage d'entrée pour une communication avec la source de gaz ; un raccord de sortie (3) fournit un siège d'étanchéité (13) et un trou axial (34) se vissant dans ledit passage de sortie pour une communication avec la sortie ;
ledit corps cylindrique de support étant un corps cylindrique définissant une chambre (7), avec une extrémité fermée et une extrémité ouverte, fixé au sein dudit tube de vanne ; l'axe de ladite chambre dudit corps cylindrique de support est parallèle à l'axe dudit trou axial dudit raccord de sortie ;
ledit ensemble solénoïde axialement mobile comprenant une bride (10), une bobine électrique (11), une butée (9), un manchon (8) et une tige magnétique (15) ; ledit manchon comportant un espace creux et étant raccordé entre ladite butée et ladite bride ; ladite bride étant un disque cylindrique, fournissant un petit siège d'étanchéité, un orifice de prélèvement (33) à une extrémité à proximité dudit manchon ; un insert en plastique annulaire (14) est moulé sur ladite bride au niveau du côté qui est proche de la sortie, pour fournir un joint ; un trou axial (35) raccordant ledit orifice de prélèvement se présentant sous forme d'un passage de ventilation vers ladite sortie dudit espace creux ; ladite tige magnétique (15), apte à coulisser au sein dudit espace creux dudit manchon, pour ouvrir et fermer ledit orifice de prélèvement ; ladite bobine électrique (11) étant enroulée autour dudit manchon (8) pour produire un champ magnétique ;
ledit ensemble solénoïde axialement mobile étant apte à coulisser dans ladite chambre dudit corps cylindrique de support (4) entre une position ouverte et une position fermée ; de telle sorte que ledit corps cylindrique de support et ledit ensemble solénoïde mobile forment une boucle magnétique lorsque ladite bobine électrique est excitée ;
ledit ensemble solénoïde axialement mobile comprenant en outre un joint torique (28) situé dans ladite bride (10) de façon circonférentielle pour diviser ladite chambre dudit corps cylindrique de support en une chambre intérieure avant (26) et une chambre intérieure arrière (29) ; ladite chambre intérieure avant à proximité de ladite extrémité fermée dudit corps cylindrique de support et ladite chambre intérieure arrière à proximité de ladite extrémité ouverte dudit corps cylindrique de support ; ledit joint torique (24) bloquant la communication de gaz entre ladite chambre intérieure avant et ladite chambre intérieure arrière ;
un conduit de gaz, par l'intermédiaire d'un minuscule trou (27) dudit corps cylindrique de support, pour faire passer le gaz à haute pression de ladite cavité dudit tube de vanne vers ladite chambre intérieure avant dudit corps cylindrique de support ; un deuxième conduit de gaz, par l'intermédiaire d'un petit trou axial excentrique de ladite butée, pour faire passer le gaz de ladite chambre intérieure avant dudit corps cylindrique de support vers ledit espace creux dudit manchon ; un troisième conduit de gaz par l'intermédiaire dudit orifice de prélèvement (33) et ledit trou axial de ladite bride, pour faire passer le gaz dudit espace creux du manchon à la sortie dudit ensemble solénoïde axialement mobile ; ledit minuscule trou possédant un diamètre inférieur à celui à la fois dudit petit trou axial excentrique (31) et dudit orifice de prélèvement (33) de ladite bride dudit ensemble solénoïde ;
un ensemble de trous périphériques sur ledit corps cylindrique de support, à proximité de ladite extrémité ouverte dudit corps cylindrique de support, commutant le gaz à haute pression dans ladite cavité dudit tube de vanne et ladite chambre intérieure arrière ;
lorsque ladite bobine électrique (11) est désexcitée, ladite tige magnétique ferme ledit orifice de prélèvement de ladite bride et ledit ensemble solénoïde axialement mobile se déplace à ladite position fermée, ledit insert en plastique annulaire (14) de ladite bride pressée sur ledit siège d'étanchéité dudit raccord de sortie arrêtant l'écoulement de gaz à haute pression dans ladite cavité par le biais dudit trou axial dudit raccord de sortie.

2. Électrovanne à gaz à l'intérieur d'un tube selon la revendication 1, comprenant ; un ressort de compression principal (12) pour pousser ledit ensemble solénoïde axialement mobile en direction dudit siège d'étanchéité dudit raccord de sortie pour fermer ladite sortie.

3. Électrovanne à gaz à l'intérieur d'un tube selon la revendication 1, comprenant en outre un ressort de compression (17) pour pousser ladite tige magnétique en direction dudit siège d'étanchéité de ladite bride pour fermer ledit orifice de prélèvement.

4. Électrovanne à gaz à l'intérieur d'un tube selon la revendication 1, ledit tube de vanne étant un tube cylindrique, de sorte que ledit corps cylindrique de support est poussé par un ressort de compression (12) contre ledit raccord d'entrée, s'insérant dans ledit raccord de sortie au niveau de ladite extrémité ouverte ; ledit ressort de compression étant comprimé entre ledit raccord d'entrée et ladite extrémité fermée dudit corps cylindrique de support.

5. Électrovanne à gaz à l'intérieur d'un tube selon la revendication 3, ladite tige magnétique étant apte à coulisser au sein dudit espace creux dudit manchon, et poussée par ledit ressort de compression (17) à une extrémité, sur ledit petit siège d'étanchéité de ladite bride vers une position fermée ; un insert en caoutchouc (19) étant moulé sur ladite tige magnétique à l'autre extrémité, pour fournir un joint.

6. Électrovanne à gaz à l'intérieur d'un tube selon la revendication 12, dans laquelle des fils conducteurs d'extension (32) de ladite bobine électrique passent à travers le trou d'une fiche traversante interne qui est insérée dans ledit corps cylindrique de support, vers ladite cavité dudit tube de vanne.

7. Électrovanne à gaz à l'intérieur d'un tube selon la revendication 6, dans laquelle les fils conducteurs d'extension de ladite bobine électrique sont soudés sur des bornes d'un connecteur traversant externe (23) à une extrémité ; les fils externes qui proviennent d'une alimentation électrique, en passant par une fiche métallique filetée avec un trou central, sont soudés sur les bornes dudit connecteur traversant externe à l'autre extrémité ; un courant électrique passe à travers lesdits fils externes à partir de ladite alimentation électrique, ledit connecteur traversant externe, vers lesdits fils conducteurs de ladite bobine électrique, de façon à créer un champ magnétique pour des mouvements axiaux de ladite tige magnétique.

8. Électrovanne à gaz à l'intérieur d'un tube, selon la revendication 1, ledit connecteur traversant externe comprenant un joint torique pour sceller le gaz à pression interne dans ladite cavité dudit tube de vanne ; ladite fiche métallique filetée (25) se visse dans ledit raccord d'entrée, pour maintenir ledit connecteur traversant externe dans ledit raccord d'entrée.
